# FASCICULE DE BREVET EUROPEEN

(11) **EP 1 489 896 B1**
(45) Date de publication et mention de la délivrance du brevet: **07.09.2005**
(21) Numéro de dépôt: 03725285.5
(22) Date de dépôt: 13.03.2003
(51) Int. Cl.: A01D 75/30, A01D 57/20

(54) **FAUCHEUSE AGRICOLE COMPORTANT UN VEHICULE PORTEUR ET PLUSIEURS UNITES DE TRAVAIL**
LANDWIRTSCHAFTLICHE MÄHMASCHINE MIT EINEM TRÄGERFAHRZEUG UND MEHREREN ARBEITSEINHEITEN
AGRICULTURAL CUTTER COMPRISING A CARRIER VEHICLE AND SEVERAL WORK UNITS

(30) Priorité: 21.03.2002 FR 0203893
(43) Date de publication de la demande: 29.12.2004
(73) Titulaire: KUHN S.A., 67706 Saverne Cedex (FR)
(72) Inventeur: HIRONIMUS, Jeannot, F-67440 Schwebwiller (FR); NEUERBURG, Horst, F-67700 Saverne (FR); STUTZMANN, Olivier, F-57370 Zilling (FR); BONNIN, David, 2628 LP Delft (NL)
(74) Mandataire: Andres, Jean-Claude
(86) Numéro de dépôt international: PCT/FR2003/000801
(87) Numéro de publication internationale: WO 2003/079761

(56) Documents cités:
- EP-A- 0 808 556
- EP-A- 1 040 751
- EP-A- 1 093 707
- CA-A- 1 248 763
- DE-A- 19 932 285
- DE-C- 4 405 858
- DE-C- 19 931 684
- FR-A- 2 792 163
- US-A- 3 563 011
- US-A- 3 608 284
- US-A1- 2001 003 239

## Description

La présente invention se rapporte à un engin agricole comportant un véhicule porteur et plusieurs unités de travail destinées à couper un produit sur pied, lesdites unités de travail étant liées audit véhicule porteur.

Il existe dans l'état de la technique une faucheuse automotrice comportant un véhicule porteur et trois unités de travail. Ledit véhicule porteur est destiné à supporter et à entraîner lesdites unités de travail. Pour ce faire, ledit véhicule porteur comporte notamment un châssis, un moteur, et un poste de pilotage. Lesdites unités de travail sont quant à elles destinées à couper un produit sur pied tel que de l'herbe par exemple. Cette faucheuse automotrice connue comporte plus précisément une unité de travail frontale et deux unités de travail latérales. Vue suivant un sens d'avance, l'unité de travail frontale est disposée en avant dudit véhicule porteur. Les unités de travail latérales sont disposées derrière l'unité de travail frontale, de part et d'autre de la zone travaillée par cette dernière. Ainsi, cette faucheuse automotrice connue a une largeur de travail pouvant atteindre 9 mètres. En position de transport, l'unité de travail frontale est éloignée du sol par un mouvement de translation sensiblement vertical. Lesdites unités de travail latérales sont quant à elles approchées d'un plan vertical médian dudit véhicule porteur par un mouvement de pivotement. De ce fait cette faucheuse automotrice connue peut passer d'une largeur d'environ 9 mètres au travail à une largeur d'environ 3 mètres au transport. Une telle réduction de largeur est nécessaire pour être autorisé à circuler sur la voie publique.

Le brevet US 3,563,011 se rapporte à une machine avec cinq unités de coupe. Deux de ces unités de coupe se situent sur le côté droit du tracteur, deux autres se situent sur son côté gauche et une dernière se situe sous ledit tracteur. Cette disposition avec une unité de coupe sous le tracteur n'est pas appropriée à un engin agricole notamment en raison du manque d'espace pour le passage de la masse de produits au travail et pour le dégagement de l'unité de coupe du sol pour le transport.

Le but de la présente invention est d'obtenir un engin agricole permettant une largeur de travail accrue tout en respectant, en position de transport, la législation réglementant la circulation sur la voie publique.

A cet effet, l'engin agricole selon la présente invention est caractérisé par le fait qu'il comporte :
- au moins deux unités de travail frontales disposées, lors du travail et vues suivant une direction d'avance, en avant dudit véhicule porteur, lesdites unités de travail frontales étant reliées à un dispositif d'attelage frontal du véhicule porteur permettant de les déplacer suivant une direction sensiblement verticale.

D'autres caractéristiques de l'invention, à considérer séparément ou dans toutes leurs combinaisons possibles, apparaîtront encore dans la description suivante de plusieurs exemples de réalisation non limitatifs de l'invention représentés sur les dessins annexés sur lesquels :
- la **figure 1** représente, en vue de dessus et en position de travail, un premier exemple de réalisation d'un engin agricole selon la présente invention,
- la **figure 2** représente, également en vue de dessus, le premier exemple de réalisation de la figure 1 en position de transport,
- la **figure 3** représente, vu de derrière et à une autre échelle, le premier exemple de réalisation de la figure 1 en position de transport,
- la **figure 4** représente, en vue de dessus, le premier exemple de réalisation de la figure 1 dans une première configuration de travail,
- la **figure 5** représente, en vue de dessus, le premier exemple de réalisation de la figure 1 dans une deuxième configuration de travail,
- la **figure 6** représente, en vue de dessus et en position de travail, un deuxième exemple de réalisation d'un engin agricole selon la présente invention,
- la **figure 7** représente, en vue de dessus, le deuxième exemple de réalisation de la figure 6 en position de transport,
- la **figure 8** représente, en vue de dessus, le deuxième exemple de réalisation de la figure 6 dans une configuration de travail,
- la **figure 9** représente une vue partielle d'un troisième exemple de réalisation d'un engin agricole selon la présente invention en position de travail,
- la **figure 10** représente, en vue de dessus, un quatrième exemple de réalisation selon la présente invention dans une première configuration de travail,
- la **figure 11** représente, en vue de dessus, le quatrième exemple de réalisation de la figure 10 dans une deuxième configuration de travail,
- la **figure 12** représente une vue partielle, de derrière et à une autre échelle, du quatrième exemple de réalisation dans la première configuration de travail,
- la **figure 13** représente une vue partielle, de derrière et à une autre échelle, du quatrième exemple de réalisation dans la deuxième configuration de travail.

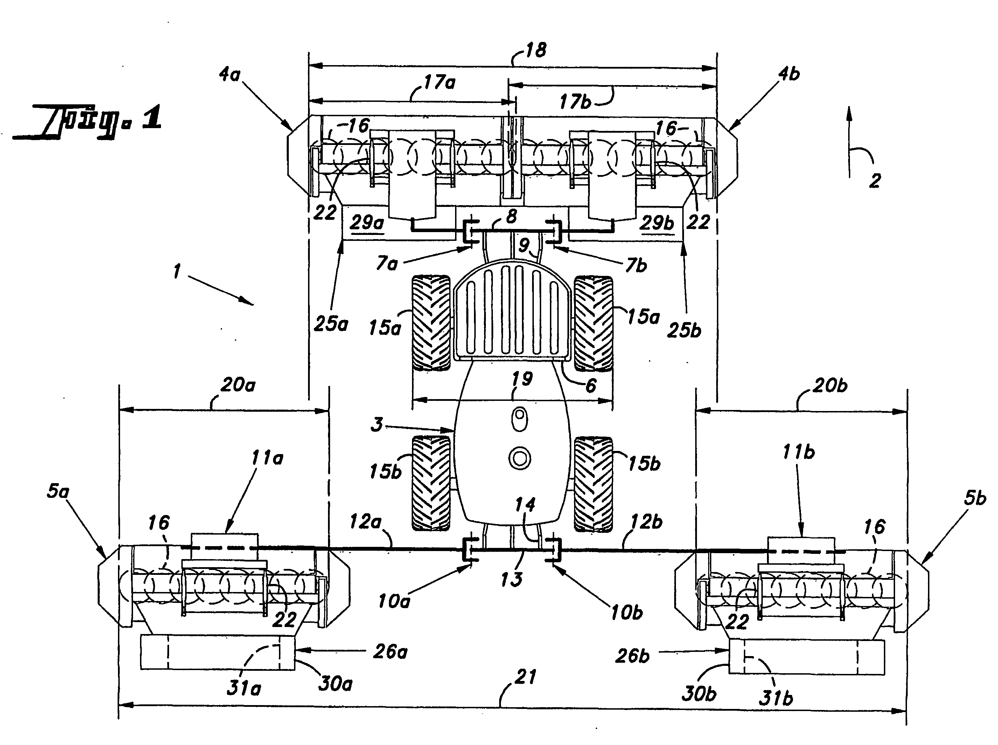

La figure 1 représente, en vue de dessus, un engin agricole (1) se déplaçant suivant une direction et un sens d'avance indiqué par la flèche (2). Dans la suite de la description, les notions suivantes "avant" et "arrière", "devant" et "derrière" sont définies par rapport au sens d'avance (2) et les notions "droite" et "gauche" sont définies en regardant ledit engin agricole (1) de l'arrière dans le sens d'avance (2).

Ledit engin agricole (1) comporte un véhicule porteur (3) et des unités de travail (4, 5). Lesdites unités de travail (4, 5) sont destinées à couper un produit sur pied tel que de l'herbe par exemple. Pour sa part, ledit véhicule porteur (3) est destiné à entraîner et à supporter au moins partiellement lesdites unités de travail (4, 5).

Ainsi d'une manière connue de l'homme de l'art, ledit véhicule porteur (3) comporte un châssis reposant sur le sol au moyen de quatre roues (15a, 15b). Lesdites quatre roues (15a, 15b) sont avantageusement directrices afin de doter ledit engin agricole (1) d'une maniabilité remarquable. Il est également prévu un moteur et une transmission permettant audit véhicule porteur (3) d'être autonome. D'une manière préférentielle, ladite transmission rend motrices lesdites quatre roues (15a, 15b). D'une manière également préférentielle, ledit moteur est en sus capable d'animer lesdites unités de travail (4, 5). La transmission de puissance dudit moteur auxdites unités de travail (4, 5) se fait au moyen d'éléments de transmission mécaniques et/ou hydrauliques connus de l'homme de l'art. Ledit véhicule porteur (3) comporte un poste de pilotage (6) permet à un conducteur de diriger l'ensemble dudit engin agricole (1).

Chaque unité de travail (4, 5) comporte quant à elle un dispositif de coupe reposant au moins partiellement sur le sol lors du travail. D'une manière connue de l'homme de l'art, ledit dispositif de coupe se compose d'une multitude d'organes de coupe entraînés en rotation autour d'un axe respectif dirigé vers le haut. La trajectoire décrite par lesdits organes de coupe en rotation a été représentée par des cercles en pointillés (16). Un tel dispositif de coupe est connu de l'homme de l'art, il ne sera donc pas décrit davantage.

Selon la présente invention, ledit engin agricole (1) comporte avantageusement :
- au moins deux unités de travail frontales (4a, 4b) disposées, lors du travail et vues suivant ladite direction d'avance (2), en avant dudit véhicule porteur (3), et
- au moins deux unités de travail latérales (5a, 5b) disposées, lors du travail, de part et d'autre d'une zone de travail (18) desdites unités de travail frontales (4a, 4b).
De plus, lesdites unités de travail frontales (4a, 4b) et lesdites unités de travail latérales (5a, 5b) peuvent avantageusement être déplacées par rapport audit véhicule porteur (3) de manière à occuper une position de transport ou une position de travail.

Dans le premier exemple de réalisation représenté sur les figures 1 à 5, ledit engin agricole (1) comporte deux unités de travail frontales (4a, 4b) et deux unités de travail latérales (5a, 5b).

En position de travail telle que représentée sur les figures 1, 4 et 5, lesdites unités de travail frontales (4a, 4b) sont disposées transversalement à ladite direction d'avance (2) et de préférence dans le prolongement l'une de l'autre. D'une manière avantageuse, lesdites unités de travail frontales (4a, 4b) sont disposées de manière à ce que leurs zones de travail respectives (17a, 17b) se chevauchent quelque peu. De ce fait, le produit sur pied sera parfaitement coupé sur l'intégralité de la zone de travail (18) couverte par lesdites unités de travail frontales (4a, 4b). En position de travail, lesdites unités de travail frontales (4a, 4b) sont de préférence disposées symétriquement par rapport à un plan vertical médian dudit véhicule porteur (3). A la lumière de la figure 1 et d'une manière également avantageuse, la largeur de ladite zone de travail (18) est supérieure à la largeur (19) au sol dudit véhicule porteur (3). Ainsi lors du travail ledit véhicule porteur (3) n'écrase pas le produit sur pied.

En position de travail telle que représentée sur les figures 1, 4 et 5, lesdites unités de travail latérales (5a, 5b) sont également disposées transversalement à ladite direction d'avance (2) et avantageusement dans le prolongement l'une de l'autre. D'une manière préférentielle, lesdites unités de travail latérales (5a, 5b) sont en sus disposées de manière à ce que leurs zones de travail respectives (20a, 20b) chevauchent quelque peu ladite zone de travail (18). En position de travail et vues suivant ladite direction d'avance (2), lesdites unités de travail latérales (5a, 5b) sont de préférence disposées en arrière desdites unités de travail frontales (4a, 4b). De ce fait dans le premier exemple de réalisation représenté sur les figures 1 à 5, lesdites unités de travail latérales (5a, 5b) sont disposées en arrière dudit véhicule porteur (3). On obtient ainsi une bonne répartition des masses dudit engin agricole (1) sur les différentes roues (15a, 15b) dudit véhicule porteur (3).

En position de travail et à la lumière de la figure 1, lesdites unités de travail (4a, 4b, 5a, 5b) ainsi disposées permettent audit engin agricole (1) d'avoir une zone de travail totale (21) relativement large. A titre d'exemple non limitatif, avec des unités de travail (4a, 4b, 5a, 5b) ayant chacune une largeur de travail de 3 mètres et en tenant compte du chevauchement desdites zones de travail respectives (17a, 17b, 20a, 20b), ledit engin agricole (1) a une largeur totale de travail avoisinant 11,5 mètres.

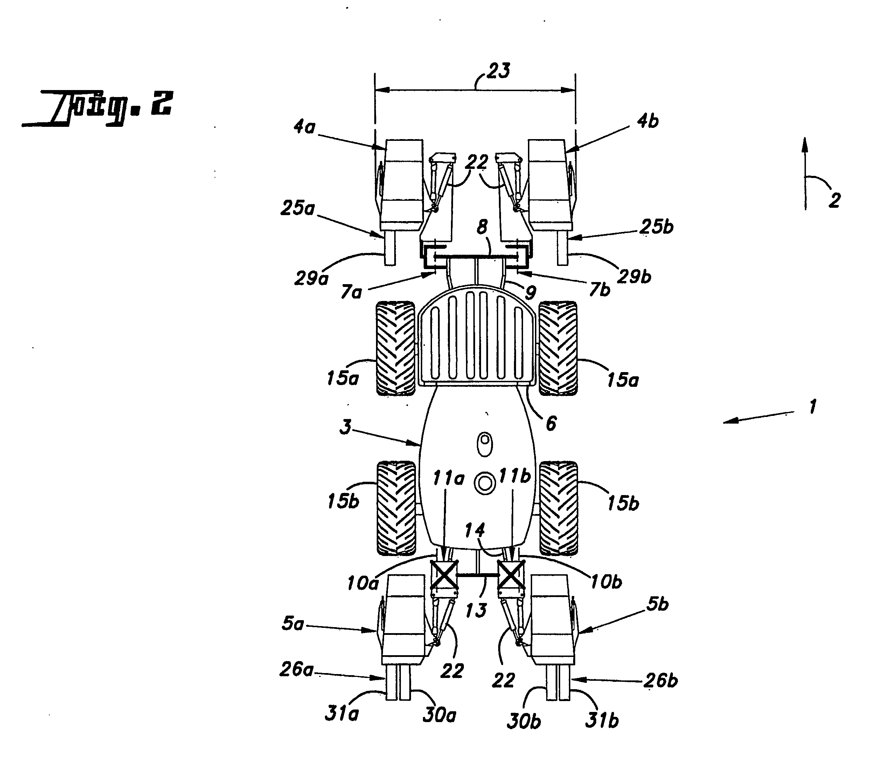

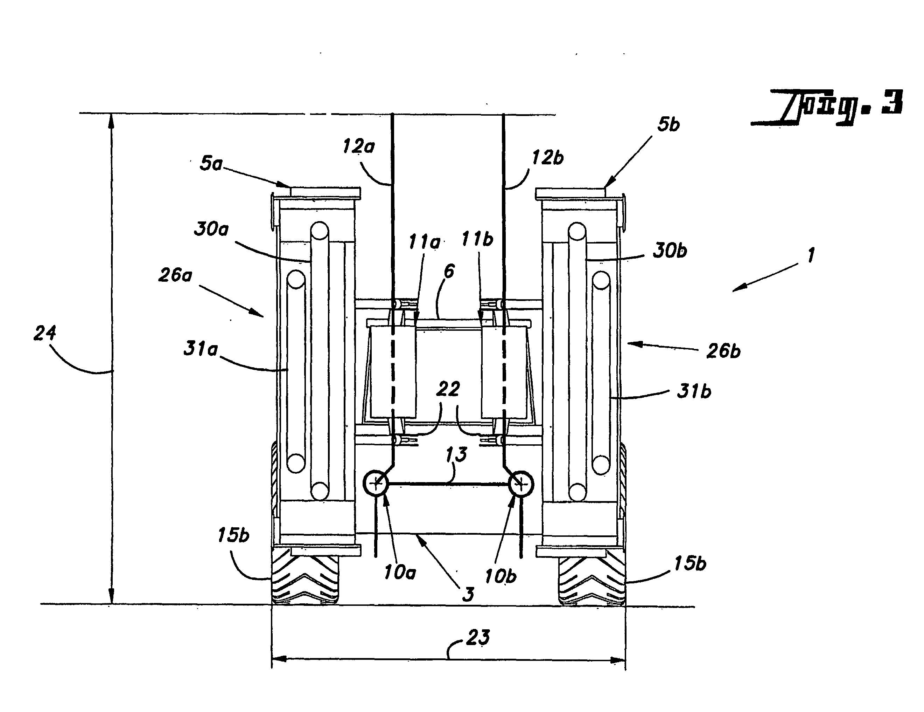

En position de transport et à la lumière des figures 2 et 3, lesdites unités de travail (4a, 4b, 5a, 5b) sont déplacées de manière à ce que ledit engin agricole (1) respecte la législation réglementant la circulation sur la voie publique. Actuellement en France, cette législation limite notamment la largeur (23) dudit engin agricole (1) à 3 mètres et la hauteur (24) dudit engin agricole (1) à 4 mètres.

A cet effet dans le premier exemple de réalisation représenté sur les figures 1 à 5, chaque unité de travail frontale (4a, 4b) est liée de manière pivotante audit véhicule porteur (3) au moyen d'une articulation respective (7a, 7b) d'axe dirigé suivant ladite direction d'avance (2). Il est également prévu des organes de manoeuvre, par exemple des vérins, destinés à pivoter lesdites unités de travail frontales (4a, 4b) autour de ladite articulation respective (7a, 7b) d'une position sensiblement horizontale de travail à une position sensiblement verticale de transport, et inversement. En position de transport, lesdites unités de travail frontales (4a, 4b) sont de préférence disposées symétriquement par rapport audit plan vertical médian dudit véhicule porteur (3). A la lumière de la figure 2, lesdites articulations respectives (7a, 7b) sont positionnées de manière à ce que, en position de transport, lesdites unités de travail frontales (4a, 4b) ne dépassent pas de la largeur autorisée (23) pour circuler sur la voie publique. On peut noter que ledit véhicule porteur (3) respecte lui aussi ladite largeur autorisée (23).

Lesdites unités de travail frontales (4a, 4b) sont liées au moyen desdites articulations respectives (7a, 7b) à une structure d'attelage (8), laquelle structure d'attelage (8) étant à son tour liée à un dispositif d'attelage frontal (9) dudit véhicule porteur (3). Ledit dispositif d'attelage frontal (9), représenté à titre d'exemple non limitatif sous la forme d'un dispositif d'attelage « 3 points », permet avantageusement de déplacer suivant une direction sensiblement verticale ladite structure d'attelage (8) et par conséquent lesdites unités de travail frontales (4a, 4b). Ainsi lors du passage de la position horizontale de travail à la position sensiblement verticale de transport, ledit dispositif d'attelage (9) permet, si nécessaire, de faciliter la manoeuvre en éloignant du sol lesdites unités de travail frontales (4a, 4b). Une fois ladite position sensiblement verticale de transport atteinte, ledit dispositif d'attelage (9) permet, si nécessaire, de diminuer quelque peu la hauteur (24) dudit engin agricole (1) en abaissant ladite structure d'attelage (8).

Dans le premier exemple de réalisation représenté sur les figures 1 à 5, chaque unité de travail latérale (5a, 5b) est liée de manière pivotante audit véhicule porteur (3) au moyen d'une articulation respective (10a, 10b) d'axe dirigé suivant ladite direction d'avance (2). Il est également prévu des organes de manoeuvre destinés à pivoter lesdites unités de travail latérales (5a, 5b) d'une position horizontale de travail à une position sensiblement verticale de transport, et inversement. En position de transport, lesdites unités de travail latérales (5a, 5b) sont de préférence disposées symétriquement par rapport audit plan vertical médian dudit véhicule porteur (3). A la lumière de la figure 3, lesdites articulations respectives (10a, 10b) sont positionnées de manière à ce que, en position de transport, lesdites unités de travail latérales (5a, 5b) ne dépassent pas de la largeur autorisée (23) pour circuler sur la voie publique.

Dans le premier exemple de réalisation et d'une manière particulièrement avantageuse, chaque unité de travail latérale (5a, 5b) est en sus liée de manière coulissante audit véhicule porteur (3) au moyen d'une articulation respective (11a, 11b) d'axe dirigé transversalement à ladite direction d'avance (2). Il est également prévu des organes de manoeuvre destinés à translater lesdites unités de travail latérales (5a, 5b) suivant lesdites articulations respectives (11a, 11b). Chaque unité de travail latérale (5a, 5b) peut ainsi être approchée ou éloignée dudit véhicule porteur (3). Lors du travail, le déplacement transversal desdites unités de travail latérales (5a, 5b) permet avantageusement de modifier le chevauchement entre ladite zone de travail (18) desdites unités de travail frontales (4a, 4b) et les zones de travail respectives (20a, 20b) desdites unités de travail latérales (5a, 5b). Une telle modification du chevauchement peut être avantageuse lorsque ledit engin agricole (1) travaille en dévers ou lorsqu'il travaille en suivant une courbe. De manière préférentielle, la translation de chaque unité de travail latérale (5a, 5b) suivant ladite articulation respective (11a, 11b) peut être commandée individuellement pendant le travail. Lors du passage en position de transport, la translation desdites unités de travail latérales (5a, 5b) vers ledit véhicule porteur (3) permet notamment de faciliter le pivotement de ces dernières autour desdites articulations (10a, 10b). A la lumière de la figure 3 lorsque lesdites unités de travail latérales (5a, 5b) sont en position sensiblement verticale de transport, ladite translation suivant lesdites articulations respectives (11a, 11b) permet également de réduire la hauteur (24) dudit engin agricole (1).

Dans le premier exemple de réalisation représenté sur les figures 1 à 5, chaque unité de travail latérale (5a, 5b) est ainsi liée de manière coulissante à un bras porteur respectif (12a, 12b) au moyen de ladite articulation respective (11a, 11b). A son tour, chaque bras porteur (12a, 12b) est lié de manière pivotante audit véhicule porteur (3) au moyen de ladite articulation respective (10a, 10b).

D'une manière préférentielle, lesdits bras porteurs (12a, 12b) sont liés au moyen desdites articulations respectives (10a, 10b) à une structure d'attelage (13), laquelle structure d'attelage (13) étant liée pour sa part à un dispositif d'attelage arrière (14) dudit véhicule porteur (3). Ledit dispositif d'attelage arrière (14), représenté à titre d'exemple non limitatif sous la forme d'un dispositif d'attelage « 3 points », permet avantageusement de déplacer suivant une direction sensiblement verticale ladite structure d'attelage (13) et par conséquent lesdites unités de travail latérales (5a, 5b). Ainsi lors du passage de la position horizontale de travail à la position sensiblement verticale de transport, ledit dispositif d'attelage arrière (14) permet, si nécessaire, de faciliter la manoeuvre en éloignant du sol lesdites unités de travail latérales (5a, 5b).

Lesdites unités de travail (4a, 4b, 5a, 5b) comportent avantageusement un dispositif de suspension respectif (22). Lors du travail, chaque dispositif de suspension (22) permet d'une part de reporter au moins une partie du poids du dispositif de coupe correspondant sur ledit véhicule porteur (3). D'autre part, chaque dispositif de suspension (22) permet audit dispositif de coupe une certaine liberté de mouvement par rapport audit véhicule porteur (3). Chaque dispositif de coupe peut ainsi évoluer individuellement suivant une direction sensiblement verticale et autour d'un axe médian de ladite unité de travail (4a, 4b, 5a, 5b) dirigé suivant ladite direction d'avance (2). Cette liberté de mouvement permet avantageusement auxdits dispositif de coupe de suivre les irrégularités du sol indépendamment dudit véhicule porteur (3). Lorsque lesdites unités de travail (4a, 4b, 5a, 5b) sont en position de travail, chaque dispositif de suspension (22) permet en sus d'éloigner avantageusement du sol chaque dispositif de coupe individuellement afin par exemple d'effectuer des manoeuvres en bout de champs ou d'éviter un obstacle. De tels dispositifs de suspension (22) sont connus de l'homme de l'art, ils ne seront donc pas décrits d'avantage.

D'une manière préférentielle, ledit poste de pilotage (6) comporte un dispositif de commande lié notamment aux organes de manoeuvre desdites articulations (7a, 7b, 10a, 10b, 11a, 11b). Ledit dispositif de commande est destiné à gérer de manière autonome le mouvement desdites unités de travail (4a, 4b, 5a, 5b) lors du passage de la position de travail à la position de transport, et inversement. Le conducteur dudit engin agricole (1) voit ainsi avantageusement sa tâche simplifiée.

D'une manière préférentielle, chaque unité de travail (4, 5) comporte également un dispositif de traitement destiné à accélérer le séchage du produit coupé par le dispositif de coupe correspondant. D'une manière connue de l'homme de l'art, chaque dispositif de traitement est constitué par exemple d'un rotor ou de deux rouleaux contrarotatifs.

D'une manière particulièrement avantageuse, chaque unité de travail (4a, 4b, 5a, 5b) comporte en sus un dispositif de convoyage respectif (25a, 25b, 26a, 26b) destiné à déplacer le produit coupé par le dispositif de coupe correspondant avant que ledit produit coupé ne touche le sol.

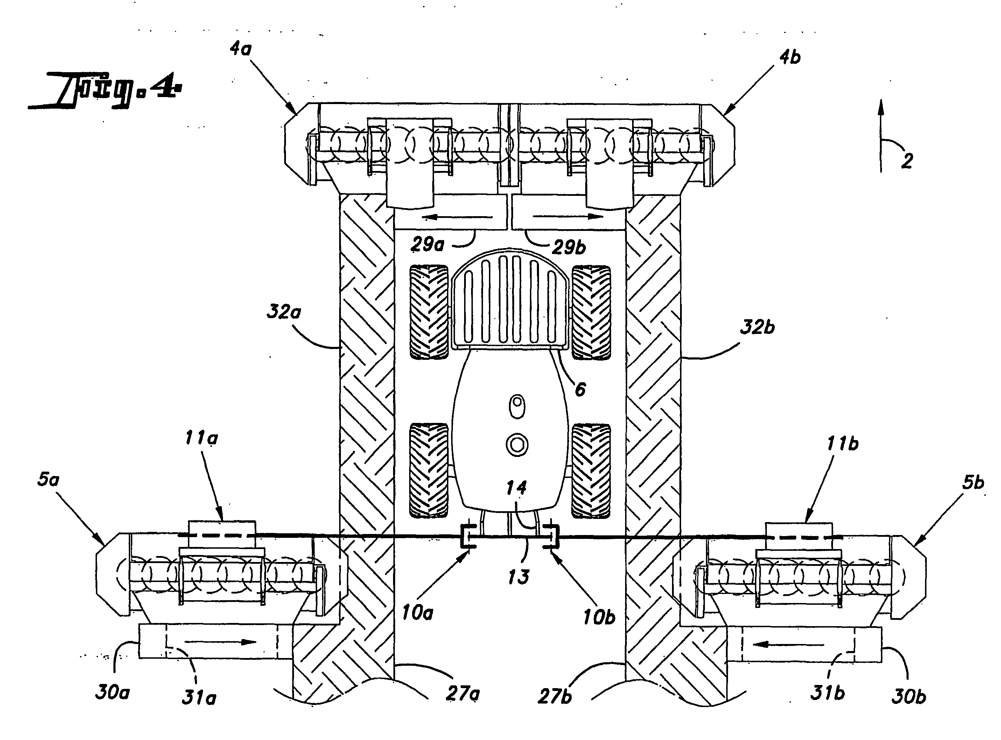

Dans une première configuration de travail telle que représentée sur la figure 4, le produit coupé sur ladite zone de travail totale (21) est regroupé en deux andains (27a, 27b).

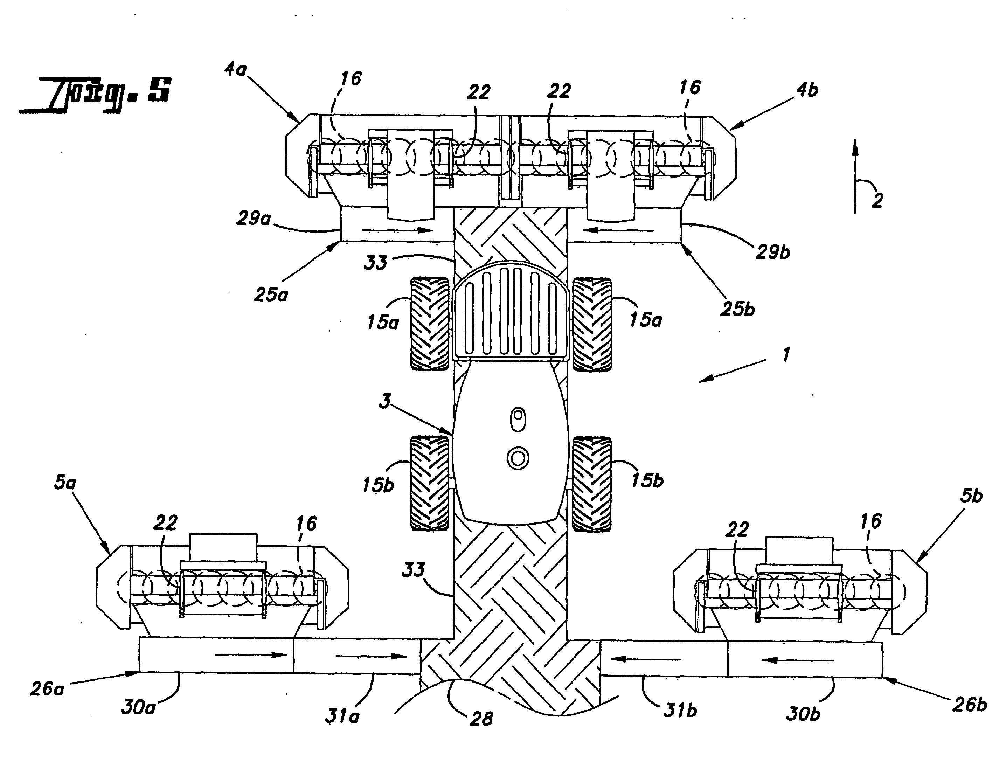

Dans une deuxième configuration de travail telle que représentée sur la figure 5, le produit coupé sur ladite zone de travail totale (21) est regroupé en un unique andain (28).

D'une manière particulièrement avantageuse, le conducteur dudit engin agricole (1) peut passer de ladite première configuration de travail à ladite deuxième configuration de travail, et inversement, depuis son poste de pilotage (6).

A cet effet dans le premier exemple de réalisation représenté sur les figures 1 à 5, lesdits dispositifs de convoyage (25a, 25b) équipant respectivement lesdites unités de travail frontales (4a, 4b) comportent chacun une bande transporteuse (29a, 29b) disposée transversalement derrière lesdits dispositifs de coupe correspondant. Chaque dispositif de convoyage (25a, 25b) est avantageusement lié de manière coulissante à ladite unité de travail frontale correspondante (4a, 4b). En position de travail, lesdits dispositifs de convoyage (25a, 25b) peuvent ainsi être translatés horizontalement et transversalement à ladite direction d'avance (2). Des organes de manoeuvre sont prévus à cet effet. D'une manière connue de l'homme de l'art, chaque bande transporteuse (29a, 29b) comporte un tapis enroulé autour de deux cylindres. Au moins l'un desdits cylindres est entraîné en rotation au moyen d'un moteur. Le sens de défilement desdites bandes transporteuses (29a, 29b) peut avantageusement être inversé. Ledit sens de défilement desdites bandes transporteuses (29a, 29b) a été représenté à l'aide de flèches sur les figures 4 et 5.

Lesdits dispositifs de convoyage (26a, 26b) équipant respectivement lesdites unités de travail latérales (5a, 5b) comportent chacun deux bandes transporteuses (30a, 31a ; 30b, 31b) disposées l'une au-dessus de l'autre. Lesdites bandes transporteuses (30a, 31a, 30b, 31b) sont disposées transversalement derrière le dispositif de coupe correspondant. D'une manière connue de l'homme de l'art, chaque bande transporteuse (30a, 31a, 30b, 31b) comporte un tapis enroulé autour de deux cylindres respectifs. Au moins l'un desdits cylindres de chaque bande transporteuse (30a, 31a, 30b, 31b) est entraîné en rotation au moyen d'un moteur. D'une manière particulièrement avantageuse, les bandes transporteuses inférieures (31a, 31b) sont avantageusement liées de manière coulissante à ladite unité de travail latérale correspondante (5a, 5b). En position de travail, lesdites bandes transporteuses inférieures (31a, 31b) peuvent ainsi être translatées horizontalement et transversalement à ladite direction d'avance (2). Des organes de manoeuvre sont prévus à cet effet. Lesdites bandes transporteuses supérieures (30a, 30b) et leurs cylindres respectifs conservent par contre une position fixe par rapport ladite unité de travail latérale correspondante (5a, 5b). Ledit sens de défilement desdites bandes transporteuses (30a, 31a; 30b, 31b) a été représenté à l'aide de flèches sur les figures 4 et 5.

Dans la première configuration de travail, lesdits dispositifs de convoyage frontaux (25a, 25b) sont rapprochés du plan vertical médian dudit véhicule porteur (3). Le sens de défilement desdites bandes transporteuses (29a, 29b) est tel que représenté sur la figure 4. Lesdits dispositifs de convoyage frontaux (25a, 25b) sont dimensionnés et translatés de manière à ce que le produit coupé par chaque unité de travail frontale (4a, 4b) soit déposé à coté dudit véhicule porteur (3) sans pour autant sortir de ladite zone de travail respective (17a, 17b). Lesdites unités de travail frontales (4a, 4b) forment ainsi un demi-andain respectif (32a, 32b) de part et d'autre dudit véhicule porteur (3). A la lumière de la figure 4, lesdites bandes transporteuses inférieures (31a, 31b) desdits dispositifs de convoyage latéraux (26a, 26b) restent positionnées sous lesdites bandes transporteuses supérieures respectives (30a, 30b). Ainsi lesdites bandes transporteuses inférieures (31a, 31b) ne sont pas au contact dû produit coupé. D'une manière préférentielle, lesdites bandes transporteuses inférieures (31a, 31b) ne sont pas entraînées dans cette configuration de travail. Par contre le sens de défilement desdites bandes transporteuses supérieures (30a, 30b) est tel que représenté sur la figure 4. Lesdites bandes transporteuses supérieures (30a, 30b) sont dimensionnées de manière à ce que le produit coupé par ladite unité de travail latérale correspondante (5a, 5b) soit déposé immédiatement à coté dudit demi-andain existant (32a, 32b). Le produit coupé par ladite unité de travail frontale (4a) et par ladite unité de travail latérale (5a) forme ainsi ledit andain (27a). De même, le produit coupé par ladite unité de travail frontale (4b) et par ladite unité de travail latérale (5b) forme ainsi ledit andain (27b).

Dans la deuxième configuration de travail représenté sur la figure 5, lesdits dispositifs de convoyage frontaux (25a, 25b) sont éloignés du plan vertical médian dudit véhicule porteur (3). Le sens de défilement desdites bandes transporteuses (29a, 29b) est tel que représenté sur la figure 5. Le produit coupé par chaque unité de travail frontale (4a, 4b) est ainsi déposé devant ledit véhicule porteur (3) pour former un seul demi-andain (33). D'une manière préférentielle, lesdits dispositifs de convoyage frontaux (25a, 25b) sont translatés de manière à ce que lesdites roues avant (15a) et les deux roues arrières (15b) dudit véhicule porteur (3) puissent passer de part et d'autre dudit demi-andain (33). A la lumière de la figure 5, lesdites bandes transporteuses inférieures (31a, 31b) desdits dispositifs de convoyage latéraux (26a, 26b) sont translatées vers le plan vertical médian dudit véhicule porteur (3). Le sens de défilement desdites bandes transporteuses supérieures (30a, 30b) et desdites bandes transporteuses inférieures (31a, 31b) est tel que représenté sur la figure 5. Le produit coupé par ladite unité de travail latérale (5a, 5b) est ainsi d'abord déplacé par ladite bande transporteuse supérieure (30a, 30b) puis par ladite bande transporteuse inférieure (31a, 31b). Lesdites bandes transporteuses inférieures (31a, 31b) sont dimensionnées de manière à ce que le produit coupé par ladite unité de travail latérale correspondante (5a, 5b) soit déposé immédiatement à coté dudit demi-andain (33). Le produit coupé par lesdites unités de travail frontales (4a, 4b) et par lesdites unités de travail latérales (5a, 5b) forme ainsi ledit andain unique (28). Ledit andain (28) est avantageusement disposé suivant un axe longitudinal médian dudit engin agricole (1).

Pour des raisons de clarté, lesdites articulations (7a, 7b), ladite structure d'attelage (8) et ledit dispositif d'attelage frontal (9) n'ont pas été représentés sur les figures 4 et 5. De même, lesdites articulations (10a, 10b), ladite structure d'attelage (13) et ledit dispositif d'attelage arrière (14), lesdites articulations (11a, 11b) et lesdits bras (12a, 12b) n'ont pas été représentés sur la figure 5.

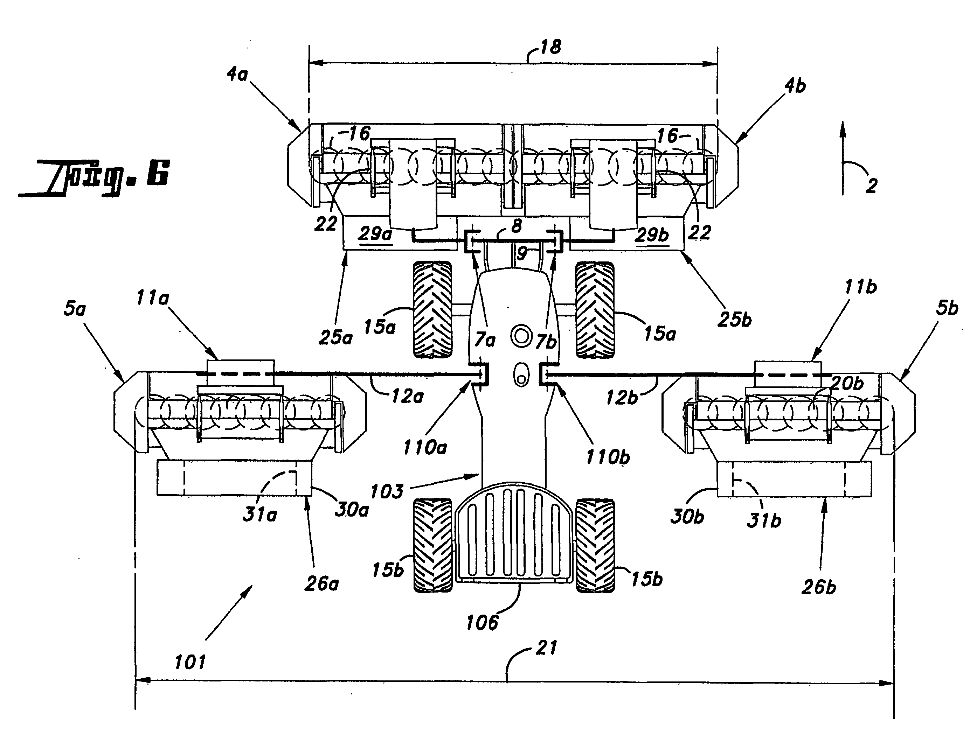

Les figures 6 à 8 représentent un deuxième exemple de réalisation d'un engin agricole (101) selon la présente invention. Cet engin agricole (101) comporte un certain nombre d'éléments qui ont été décrits précédemment. Ces éléments garderont par conséquent le même numéro de repère et ne seront pas décrits une nouvelle fois. Elle comporte également un certain nombre d'éléments qui sont comparables à des éléments de l'engin agricole (1) décrite précédemment. Ces éléments seront affectés du même numéro de repère que ces éléments comparables de l'engin agricole (1) mais augmenté de 100. Ils ne seront décrits que si cela s'avère nécessaire.

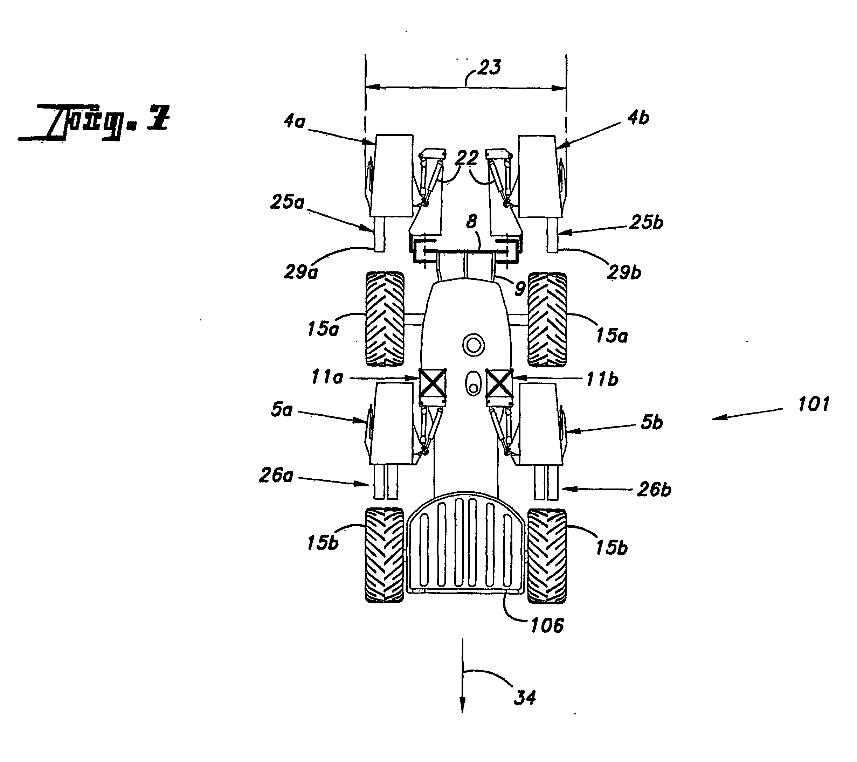

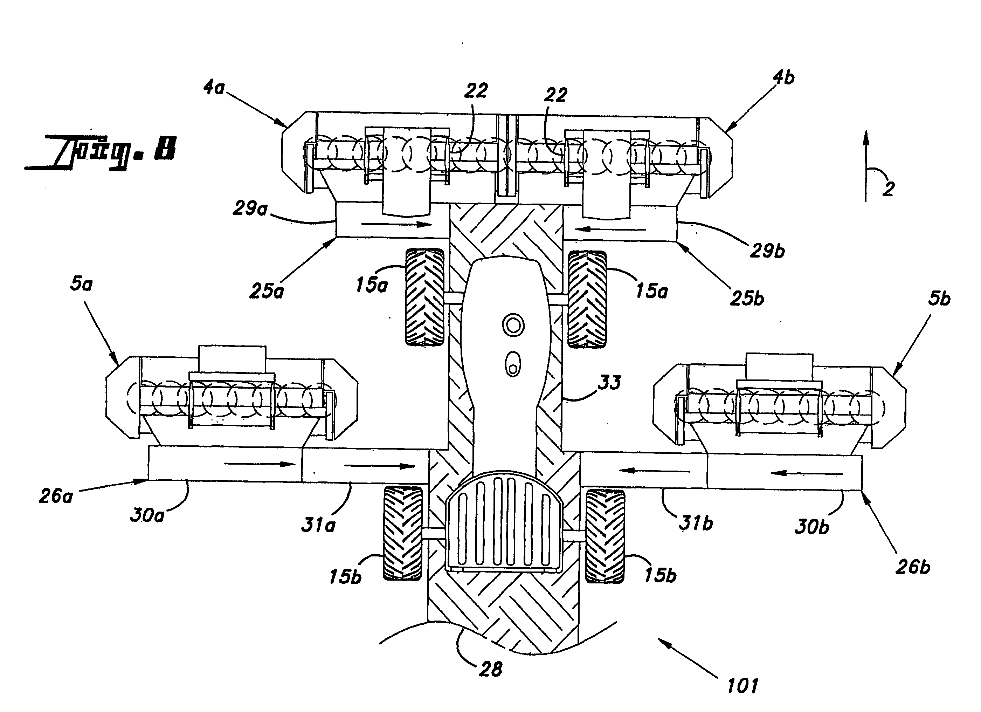

Ainsi, ledit engin agricole (101) comporte également deux unités de travail frontales (4a, 4b) et deux unités de travail latérales (5a, 5b) liés à un véhicule porteur (103). Vues suivant la direction d'avance au travail (2), lesdites unités de travail frontales (4a, 4b) sont disposées en avant dudit véhicule porteur (103). Lesdites unités de travail latérales (5a, 5b) sont disposées en arrière desdites unités de travail frontales (4a, 4b). En position de travail telle que représentée sur les figures 6 et 8, lesdites unités de travail latérales (5a, 5b) sont en sus disposées de part et d'autre de la zone de travail (18) desdites unités de travail frontales (4a, 4b).

Par contre dans le deuxième exemple de réalisation représenté sur les figures 6 à 8, lesdites unités de travail latérales (5a, 5b) sont disposées sur les cotés dudit véhicule porteur (103). De plus vu suivant ladite direction d'avance au travail (2), ledit véhicule porteur (103) comporte un poste de pilotage (106) disposé avantageusement en arrière desdites unités de travail latérales (5a, 5b). Lors du travail, le conducteur dudit engin agricole (101) a ainsi simultanément dans son champ de vision lesdites unités de travail frontales (4a, 4b) et lesdites unités de travail latérales (5a, 5b).

Dans le deuxième exemple de réalisation, lesdites unités de travail (4a, 4b, 5a, 5b) sont également déplacées par rapport audit véhicule porteur (103) de manière à atteindre une position de transport telle que représentée sur la figure 7.

Ainsi chaque unité de travail frontale (4a, 4b) est liée de manière pivotante audit véhicule porteur (103). Cette liaison a été largement décrite dans le premier exemple de réalisation représenté sur les figures 1 à 5.

Dans le deuxième exemple de réalisation représenté sur les figures 6 à 8, chaque unité de travail latérale (5a, 5b) est liée de manière pivotante audit véhicule porteur (103) au moyen d'une articulation respective (110a, 110b) d'axe dirigé suivant ladite direction d'avance (2). Il est également prévu des organes de manoeuvre destinés à pivoter lesdites unités de travail latérales (5a, 5b) d'une position horizontale de travail à une position sensiblement verticale de transport, et inversement. En position de transport, lesdites unités de travail latérales (5a, 5b) sont de préférence également disposées symétriquement par rapport audit plan vertical médian dudit véhicule porteur (103). A la lumière de la figure 7, lesdites articulations respectives (110a, 110b) sont positionnées de manière à ce que, en position de transport, lesdites unités de travail latérales (5a, 5b) ne dépassent pas dudit gabarit (23) autorisé pour circuler sur la voie publique. En position de transport, lesdites unités de travail latérales (5a, 5b) sont avantageusement disposées entre les roues avant (15a) et les roues arrières (15b) dudit véhicule porteur (103).

D'une manière particulièrement avantageuse, chaque unité de travail latérale (5a, 5b) est en sus liée de manière coulissante audit véhicule porteur (103) au moyen d'une articulation respective (11a, 11b) d'axe dirigé transversalement à ladite direction d'avance (2). Il est également prévu des organes de manoeuvre destinés à translater lesdites unités de travail latérales (5a, 5b) suivant lesdites articulations respectives (11a, 11b). Chaque unité de travail latérale (5a, 5b) peut ainsi être rapprochée ou éloignée dudit véhicule porteur (103).

De ce fait dans le deuxième exemple de réalisation représenté sur les figures 6 à 8, chaque unité de travail latérale (5a, 5b) est liée au moyen de ladite articulation respective (11a, 11b) à un bras porteur respectif (12a, 12b). A son tour, chaque bras porteur (12a, 12b) est lié au moyen de ladite articulation respective (110a, 110b) audit véhicule porteur (103).

Dans le deuxième exemple de réalisation et d'une manière particulièrement avantageuse, ledit engin agricole (101) se déplace lors du transport suivant une direction d'avance (34) de sens opposé à ladite direction d'avance (102). Pour ce faire, ledit poste de pilotage (106) est avantageusement du type « à conduite inversée ». Ainsi à la lumière de la figure 7, lesdites unités de travail (4a, 4b, 5a, 5b) disposées à la verticale n'encombrent pas le champ de vision dudit conducteur lors du transport.

Dans le deuxième exemple de réalisation, ledit engin agricole (101) peut travailler suivant une première configuration de travail où le produit coupé sur ladite zone de travail totale (21) est regroupé en deux andains. Cette première configuration de travail dudit engin agricole (101) n'a pas été représentée car elle a été largement décrite dans le premier exemple de réalisation.

Ledit engin agricole (101) peut également travailler suivant une deuxième configuration de travail, telle que représentée sur la figure 8, où le produit coupé sur ladite zone de travail totale (21) est regroupé en un unique andain (28).

Dans la deuxième configuration de travail représentée sur la figure 8, lesdits dispositifs de convoyage frontaux (25a, 25b) sont éloignés du plan vertical médian dudit véhicule porteur (103). Le sens de défilement desdites bandes transporteuses (29a, 29b) est tel que représenté sur la figure 8. Le produit coupé par chaque unité de travail frontale (4a, 4b) est ainsi déposé devant ledit véhicule porteur (103) pour former un demi-andain (33). D'une manière préférentielle, lesdits dispositifs de convoyage frontaux (25a, 25b) sont translatés de manière à ce que lesdites roues avant (15a) et les deux roues arrières (15b) dudit véhicule porteur (103) puissent passer de part et d'autre dudit demi-andain (33). A la lumière de la figure 8, lesdites bandes transporteuses inférieures (31a, 31b) desdits dispositifs de convoyage latéraux (26a, 26b) sont translatées vers le plan vertical médian dudit véhicule porteur (103). Le sens de défilement desdites bandes transporteuses supérieures (30a, 30b) et desdites bandes transporteuses inférieures (31a, 31b) est tel que représenté sur la figure 8. Le produit coupé par ladite unité de travail latérale (5a, 5b) est ainsi d'abord déplacé par ladite bande transporteuse supérieure (30a, 30b) puis par ladite bande transporteuse inférieure (31a, 31b). Lesdites bandes transporteuses inférieures (31a, 31b) sont dimensionnées de manière à ce que le produit coupé par ladite unité de travail latérale correspondante (5a, 5b) soit déposé immédiatement à coté dudit demi-andain (33). Le produit coupé par lesdites unités de travail frontales (4a, 4b) et par lesdites unités de travail latérales (5a, 5b) forme ainsi ledit andain unique (28). Ledit andain (28) est avantageusement disposé suivant un axe longitudinal médian dudit engin agricole (101).

Dans le deuxième exemple de réalisation représenté sur la figure 8, le produit coupé par lesdites unités de travail latérales (5a, 5b) est déposé en avant desdites roues arrières (15b). Ledit andain unique (28) atteint ainsi sa largeur finale entre lesdites roues avant (15a) et lesdites roues arrières (15b). D'une manière particulièrement avantageuse, lesdites roues arrières (15b) sont liées de manière coulissante audit véhicule porteur (103) au moyen d'une articulation respective définissant un axe sensiblement horizontal et transversal à ladite direction d'avance (2). Il est également prévu des organes de manoeuvre destinés à translater lesdites roues arrières (15b) suivant ladite articulation respective. Ainsi lesdites roues arrières (15b) peuvent, si nécessaire, être éloignées dudit véhicule porteur (103) afin de ne pas rouler sur ledit andain unique (28). Au transport par contre, lesdites roues arrières (15b) retrouvent leurs positions initiales telles que représentées sur les figures 6 et 7 de manière à ne pas dépasser dudit gabarit (23) autoriser pour circuler sur la voie publique.

Pour des raisons de clarté, différents éléments permettant de lier lesdites unités de travail (4a, 4b, 5a, 5b) audit véhicule porteur (103) n'ont pas été représentés sur la figure 8.

Les engins agricoles qui viennent d'être décrits, ne sont que des exemples de réalisation qui ne sauraient en aucun cas limiter le domaine de protection défini par les revendications suivantes.

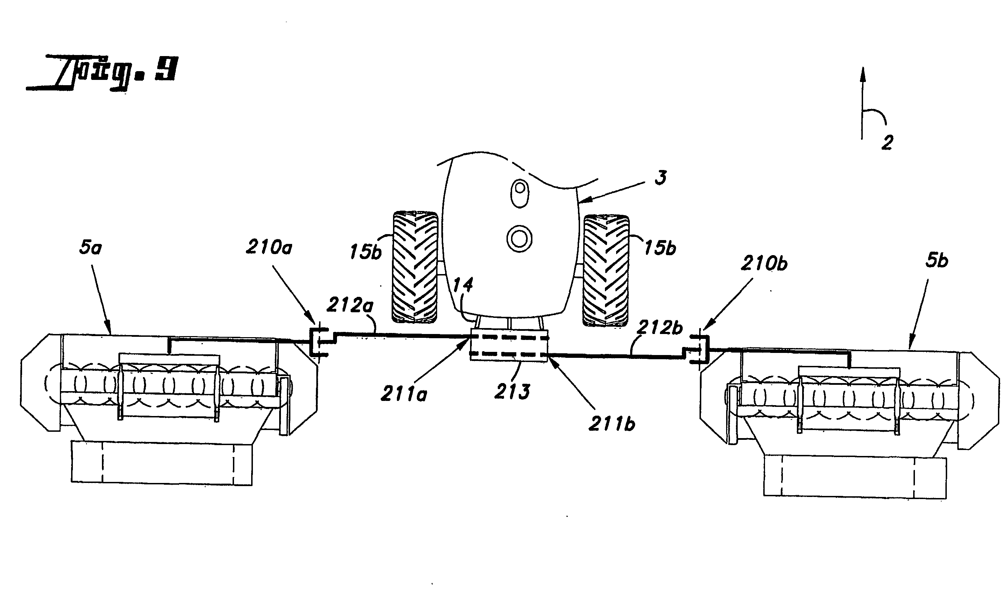

Ainsi suivant un troisième exemple de réalisation représenté partiellement et à une autre échelle sur la figure 9, lesdites unités de travail latérales (5a, 5b) sont liées de manière pivotante à un bras respectif (212a, 212b) au moyen d'une articulation (210a, 210b) d'axe dirigé suivant ladite direction d'avance (2). A son tour, chaque bras (212a, 212b) est lié de manière coulissante audit véhicule porteur (3) au moyen d'une articulation (211a, 211b) d'axe dirigé transversalement à ladite direction d'avance (2).

Suivant un autre exemple non représenté, ledit engin agricole comporte trois unités de travail frontales disposées, lors du travail, en avant dudit véhicule porteur. Au moins une desdites unités de travail frontales est liée de manière pivotante audit véhicule porteur au moyen d'une articulation d'axe dirigé suivant ladite direction d'avance. De plus, au moins une desdites unités de travail frontales est liée de manière coulissante audit véhicule porteur au moyen d'une articulation d'axe dirigé transversalement à ladite direction d'avance.

Suivant encore un autre exemple de réalisation non représenté, ledit bras respectif est avantageusement télescopique. Ainsi d'une manière connue en soi, la longueur dudit bras respectif peut être augmentée ou réduite.

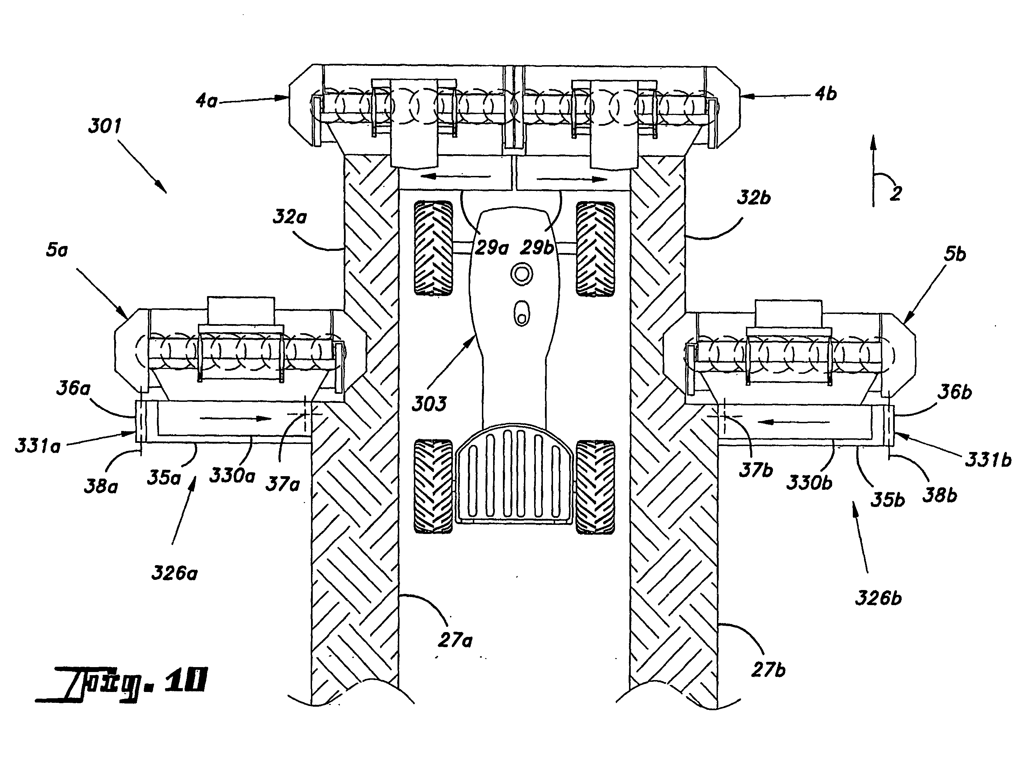

Les figures 10 à 13 représentent un quatrième exemple de réalisation d'un engin agricole (301) selon la présente invention. Ce quatrième exemple de réalisation se distingue des précédents exemples de réalisation décrits principalement au niveau des dispositifs de convoyage (326a, 326b) équipant lesdites unités de travail latérales (5a, 5b). En effet, chaque dispositif de convoyage (326a, 326b) comporte une bande transporteuse supérieure (330a, 330b) et une bande transporteuse inférieure (331a, 331b). Par contre lesdites -bandes transporteuses inférieures (331a, 331b) sont désormais liées de manière pivotante à ladite unité de travail latérale correspondante (5a, 5b) au moyen d'une articulation respective (37a, 37b) d'axe dirigé vers le haut. En position de travail, lesdites bandes transporteuses inférieures (331a, 331b) peuvent ainsi être pivotées dans un plan sensiblement horizontal. Des organes de manoeuvre sont prévus à cet effet. Lesdites bandes transporteuses supérieures (330a, 330b) du quatrième exemple de réalisation sont semblables auxdites bandes transporteuses supérieures (30a, 30b) du premier exemple de réalisation, elles ne seront donc pas décrites davantage.

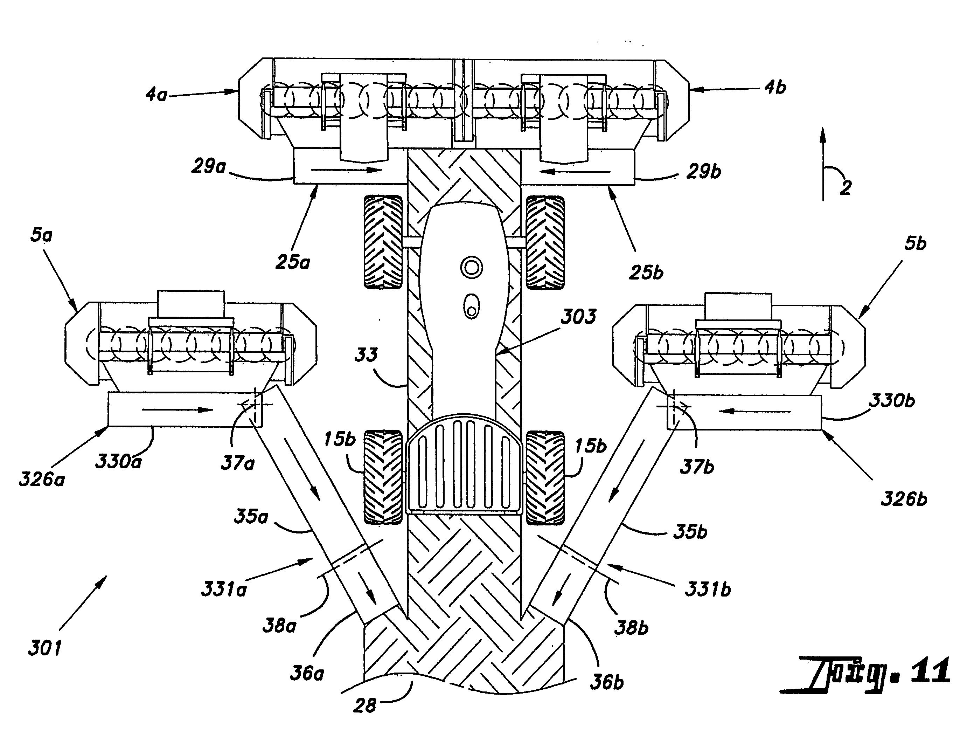

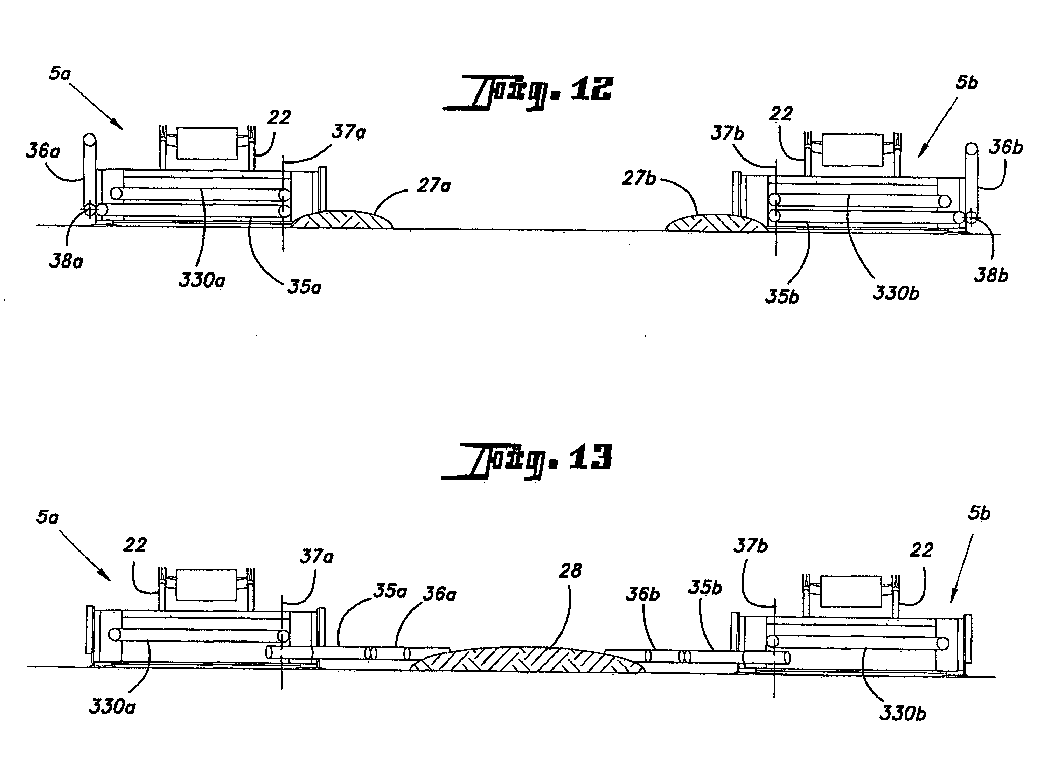

Dans la première configuration de travail représentée sur les figures 10 et 12, ledit engin agricole (301) regroupe le produit coupé en deux andains (27a, 27b). A cet effet, lesdites bandes transporteuses inférieures (331a, 331b) restent positionnées sous lesdites bandes transporteuses supérieures correspondantes (330a, 330b). Ainsi lesdites bandes transporteuses inférieures (331a, 331b) ne sont pas au contact du produit coupé. D'une manière préférentielle, lesdites bandes transporteuses inférieures (331a, 331b) ne sont pas entraînées dans cette configuration de travail. Par contre le sens de défilement desdites bandes transporteuses supérieures (330a, 330b) est tel que représenté sur la figure 10. Le produit coupé par ladite unité de travail latérale (5a, 5b) est donc déposé immédiatement à coté dudit demi-andain existant (32a, 32b) de manière à créer un andain respectif (27a, 27b). Cette position desdites bandes transporteuses inférieures (331a, 331b) est également utilisée lorsque lesdites unités de travail latérales (5a, 5b) sont mises en position de transport.

Dans la deuxième configuration de travail représentée sur les figures 11 et 13, ledit engin agricole (301) regroupe le produit coupé en un unique andain (28). A cet effet, lesdites bandes transporteuses inférieures (331a, 331b) sont pivotées autour de ladite articulation respective (37a, 37b) vers un plan vertical médian dudit véhicule porteur (303). La position desdites articulation (37a, 37b) est telle que lesdites bandes transporteuses inférieures (331a, 331b) puissent, après pivotement, emmener le produit coupé provenant desdites bandes transporteuses supérieures correspondantes (330a, 330b). Lesdites bandes transporteuses inférieures (331a, 331b) et lesdites bandes transporteuses supérieures (330a, 330b) sont entraînées suivant le sens de défilement représenté sur la figure 11. Le produit coupé par ladite unité de travail (5a, 5b) est ainsi d'abord déplacé par ladite bande transporteuse supérieure (330a, 330b) puis par ladite bande transporteuse inférieure (331a, 331b). Lesdites bandes transporteuses inférieures (331a, 331b) sont dimensionnées de manière à ce que ledit produit coupé par ladite unité de travail latérale correspondante (5a, 5b) soit déposé immédiatement à coté dudit demi-andain (33) formé par lesdites unités de travail frontales (4a, 4b). Le produit coupé par lesdites unités de travail frontales (4a, 4b) et par lesdites unités de travail latérales (5a, 5b) forme ainsi ledit andain unique (28).

A la lumière de la figure 11, lesdites bandes transporteuses inférieures (331a, 331b) permettent avantageusement de déposer ledit produit coupé derrière lesdites roues arrières (15b) dudit véhicule porteur (303), même lorsque lesdites unités de travail latérales (5a, 5b) sont disposées en position de travail à coté dudit véhicule porteur (303).

Pour des raisons de clarté, seules lesdites unités de travail latérales (5a, 5b) et lesdits andains (27a, 27b ; 28) ont été représentés sur les figures 12 et 13.

D'une manière avantageuse, chaque bande transporteuse inférieure (331a, 331b) se compose à son tour d'une première bande transporteuse (35a, 35b) et d'une deuxième bande transporteuse (36a, 36b). Ladite première bande transporteuse (35a, 35b) et ladite deuxième bande transporteuse (36a, 36b) sont disposées dans le prolongement l'une de l'autre. De plus, ladite deuxième bande transporteuse (36a, 36b) est liée de manière pivotante à ladite première bande transporteuse correspondante (35a, 35b) au moyen d'une articulation respective (38a, 38b) d'axe au moins sensiblement horizontale.

Dans la première configuration de travail et à la lumière des figures 10 et 12, ladite première bande transporteuse (35a, 35b) est sensiblement horizontale et ladite deuxième bande transporteuse (36a, 36b) est sensiblement verticale. Une telle position permet notamment de réduire l'encombrement dudit dispositif de convoyage (326a, 326b). Ladite première bande transporteuse (35a, 35b) est disposée au moins partiellement en dessous de ladite bande transporteuse supérieure correspondante (330a, 330b) de manière à ne pas entrer en contact avec ledit produit coupé. Le produit coupé est donc uniquement transporté par lesdites bandes transporteuses supérieures (330a, 330b).

Dans la deuxième configuration de travail et à la lumière des figures 10 et 12, ladite première bande transporteuse (35a, 35b) reste sensiblement horizontale. Par contre ladite deuxième bande transporteuse (36a, 36b) est désormais pivotée autour de ladite articulation (38a, 38b) de manière à être également sensiblement horizontale. De plus, le sens de défilement desdites premières et deuxièmes bandes transporteuses (35a, 35b, 36a, 36b) est tel que représenté sur la figure 11. Le produit coupé est donc transporté par lesdites bandes transporteuses supérieures (330a, 330b), puis par lesdites premières bandes transporteuses (35a, 35b) et enfin par lesdites deuxièmes bandes transporteuses (36a, 36b).

A la lumière notamment de la figure 12, l'axe de ladite articulation respective (38a, 38b) est confondu avec l'axe de rotation d'un desdits cylindres de ladite deuxième bande transporteuse correspondante (36a, 36b).

## Revendications

1. Engin agricole comportant un véhicule porteur (3 ; 103) et plusieurs unités de travail (4a, 4b, 5a, 5b) destinées à couper un produit sur pied, lesdites unités de travail (4a, 4b, 5a, 5b) étant liées audit véhicule porteur (3 ; 103), ledit engin agricole (1; 101) comportant:
- au moins deux unités de travail frontales (4a, 4b)
- au moins deux unités de travail latérales (5a, 5b) disposées, lors du travail, de part et d'autre d'une zone de travail (18) desdites unités de travail frontales (4a, 4b),
lesdites unités de travail frontales (4a, 4b) et lesdites unités de travail latérales (5a, 5b) pouvant être déplacées par rapport audit véhicule porteur (3 ; 103) de manière à occuper une position de transport ou une position de travail, **caractérisé par le fait que** lesdites unités de travail frontales (4a,4b) sont disposées, lors du travail et vues suivant une direction d'avance (2) dudit véhicule porteur (3 ; 103), en avant dudit véhicule porteur (3 ; 103), lesdites unités de travail frontales (4a, 4b) étant reliées à un dispositif d'attelage frontal (9) du véhicule porteur (3 ; 103) permettant de les déplacer suivant une direction sensiblement verticale.

2. Engin agricole selon la revendication 1, ***caractérisé par le fait que*** lors du travail et vues suivant ladite direction d'avance (2), lesdites unités de travail latérales (5a, 5b) sont disposées en arrière desdites unités de travail frontales (4a, 4b).

3. Engin agricole selon la revendication 2, ***caractérisé par le fait que*** lors du travail et vues suivant ladite direction d'avance (2), lesdites unités de travail latérales (5a, 5b) sont disposées en arrière dudit véhicule porteur (3 ; 103).

4. Engin agricole selon la revendication 2, ***caractérisé par le fait que*** lors du travail et vues suivant ladite direction d'avance (2), lesdites unités de travail latérales (5a, 5b) sont disposées sur les cotés dudit véhicule porteur (3 ; 103).

5. Engin agricole selon l'une quelconque des revendications 1 à 4, ***caractérisé par le fait qu*****'**au moins une desdites unités de travail (4a, 4b, 5a, 5b) est liée de manière pivotante audit véhicule porteur (3 ; 103) au moyen d'une articulation respective (7a, 7b, 10a, 10b; 110a, 110b; 210a, 210b) d'axe dirigé suivant ladite direction d'avance (2) et qu'il est prévu des organes de manoeuvre destinés à pivoter ladite au moins une unité de travail (4a, 4b, 5a, 5b) autour de ladite articulation respective (7a, 7b, 10a, 10b; 110a, 110b; 210a, 210b) de ladite position de travail à ladite position de transport, et inversement.

6. Engin agricole selon la revendication 5, ***caractérisé par le fait que*** ladite au moins une unité de travail (4a, 4b, 5a, 5b) est disposée :
- en position de travail, d'une manière au moins sensiblement horizontale, et
- en position de transport, d'une manière au moins sensiblement verticale.

7. Engin agricole selon la revendication 5 ou 6, ***caractérisé par le fait qu*****'**au moins une desdites unités de travail frontales (4a, 4b) est liée au moyen de ladite articulation respective (7a, 7b) à une structure d'attelage (8), laquelle structure d'attelage (8) étant à son tour liée audit véhicule porteur (3).

8. Engin agricole selon la revendication 7, ***caractérisé par le fait que*** ledit véhicule porteur (3 ; 103) comporte un dispositif d'attelage frontal (9) destiné à déplacer ladite structure d'attelage (8) suivant une direction sensiblement verticale.

9. Engin agricole selon l'une quelconque des revendications 1 à 8, ***caractérisé par le fait qu*****'**au moins une desdites unités de travail (4a, 4b, 5a, 5b) est liée de manière coulissante audit véhicule porteur (3 ; 103) au moyen d'une articulation respective (11a, 11b; 211a, 211b) d'axe dirigé transversalement à ladite direction d'avance (2) et qu'il est prévu des organes de manoeuvre destinés à translater ladite au moins une unité de travail (4a, 4b, 5a, 5b) suivant ladite articulation respective (11a, 11b; 211a, 211b).

10. Engin agricole selon l'une quelconque des revendications 5 à 8 pris en combinaison avec la revendication 9, ***caractérisé par le fait qu*****'**au moins une desdites unités de travail latérales (5a, 5b) est liée de manière coulissante au moyen de ladite articulation respective (11a, 11b) à un bras porteur respectif (12a, 12b), ledit bras porteur (12a, 12b) étant à son tour lié de manière pivotante au moyen de ladite articulation respective (10a, 10b; 110a, 110b) audit véhicule porteur (3).

11. Engin agricole selon l'une quelconque des revendications 5 à 8 pris en combinaison avec la revendication 9, ***caractérisé par le fait qu'***au moins une desdites unités de travail latérales (5a, 5b) est liée de manière pivotante au moyen de ladite articulation respective (210a, 210b) à un bras porteur respectif (212a, 212b), ledit bras porteur (212a, 212b) étant à son tour lié de manière coulissante au moyen de ladite articulation respective (211a, 211b) audit véhicule porteur (3).

12. Engin agricole selon la revendication 10 ou 11, ***caractérisé par le fait que*** ledit bras porteur (12a, 12b; 212a, 212b) est lié au moyen de ladite articulation respective (10a, 10b; 211a, 211b) à une structure d'attelage (13), laquelle structure d'attelage (13) étant à son tour liée audit véhicule porteur (3).

13. Engin agricole selon la revendication 12, ***caractérisé par le fait que*** ledit véhicule porteur (3) comporte un dispositif d'attelage arrière (14) destiné à déplacer ladite structure d'attelage (13) suivant une direction sensiblement verticale.

14. Engin agricole selon l'une quelconque des revendications 1 à 13, ***caractérisé par le fait qu*****'**il comporte deux unités de travail frontales (4a, 4b).

15. Engin agricole selon l'une quelconque des revendications 1 à 14, ***caractérisé par le fait qu*****'**il comporte deux unités de travail latérales (5a, 5b).

16. Engin agricole selon l'une quelconque des revendications 1 à 15, ***caractérisé par le fait que*** ledit véhicule porteur (3 ; 103) comporte un dispositif de commande destiné à gérer de manière autonome le mouvement desdites unités de travail (4a, 4b, 5a, 5b) lors du passage de ladite position de transport à ladite position de travail, et inversement.

17. Engin agricole selon l'une quelconque des revendications 1 à 16, ***caractérisé par le fait que*** chaque unité de travail (4a, 4b, 5a, 5b) comporte un dispositif de coupe respectif destiné à couper un produit sur pied et qu'au moins une desdites unités de travail (4a, 4b, 5a, 5b) comporte un dispositif de convoyage respectif (25a, 25b, 26a, 26b ; 326a, 326b) destiné à déplacer le produit coupé par le dispositif de coupe correspondant avant que ledit produit coupé ne touche le sol.

18. Engin agricole selon la revendication 17, ***caractérisé par le fait qu'***au moins une desdites unités de travail frontales (4a, 4b) comporte un dispositif de convoyage respectif (25a, 25b).

19. Engin agricole selon la revendication 18, ***caractérisé par le fait que*** ledit dispositif de convoyage (25a, 25b) comporte une bande transporteuse (29a, 29b) disposée transversalement derrière ledit dispositif de coupe correspondant.

20. Engin agricole selon la revendication 19, ***caractérisé par le fait qu*****'**il est prévu un moteur destiné à entraîner ladite bande transporteuse (29a, 29b) suivant deux sens de défilement.

21. Engin agricole selon l'une quelconque des revendications 18 à 20, ***caractérisé par le fait que*** ledit dispositif de convoyage (25a, 25b) est lié de manière coulissante à ladite unité de travail frontale correspondante (4a, 4b) et qu'il est prévu des organes de manoeuvre destinés à translater ledit dispositif de convoyage (25a, 25b) horizontalement, vu en position de travail, et transversalement à ladite direction d'avance (2).

22. Engin agricole selon l'une quelconque des revendications 17 à 21, ***caractérisé par le fait qu*****'**au moins une desdites unités de travail latérales (5a, 5b) comporte un dispositif de convoyage respectif (26a, 26b ; 326a, 326b).

23. Engin agricole selon la revendication 22, ***caractérisé par le fait que*** ledit dispositif de convoyage (26a, 26b ; 326a, 326b) comporte une bande transporteuse supérieure (30a, 30b ; 330a, 330b) et une bande transporteuse inférieure (31a, 31b ; 331a, 331b), lesdites bandes transporteuses (30a, 31a; 30b, 31b; 330a, 331a ; 330b, 331b) étant disposées, au moins dans une position, l'une au-dessus de l'autre et transversalement derrière le dispositif de coupe correspondant.

24. Engin agricole selon la revendication 23, ***caractérisé par le fait que*** ladite bande transporteuse inférieure (31a, 31b) est liée de manière coulissante à ladite unité de travail latérale correspondante (5a, 5b) et qu'il est prévu des organes de manoeuvre destinés à translater ladite bande transporteuse inférieure (31a, 31b) horizontalement, vu en position de travail, et transversalement à ladite direction d'avance (2).

25. Engin agricole selon la revendication 23, ***caractérisé par le fait que*** ladite bande transporteuse inférieure (331a, 331b) est liée de manière pivotante à ladite unité de travail latérale correspondante (5a, 5b) au moyen d'une articulation (37a, 37b) d'axe dirigé vers le haut.

26. Engin agricole selon la revendication 25, ***caractérisé par le fait que*** ladite bande transporteuse inférieure (331a, 331b) comporte une première bande transporteuse (35a, 35b) et une deuxième bande transporteuse (36a, 36b).

27. Engin agricole selon la revendication 26, ***caractérisé par le fait que*** ladite deuxième bande transporteuse (36a, 36b) est liée de manière pivotante à ladite première bande transporteuse correspondante (35a, 35b) au moyen d'une articulation respective (38a, 38b) d'axe sensiblement horizontal.

28. Engin agricole selon l'une quelconque des revendications 1 à 27, ***caractérisé par le fait que*** ledit véhicule porteur (3 ; 103) comporte deux roues arrières (15b), lesdites roues arrières (15b) étant liées de manière coulissante audit véhicule porteur (103) au moyen d'une articulation respective d'axe sensiblement horizontal et transversal à ladite direction d'avance (2), et qu'il est prévu des organes de manoeuvre destinés à translater chaque roue arrière (15b) suivant ladite articulation respective.

## Patentansprüche

1. Landwirtschaftliche Maschine, die ein Trägerfahrzeug (3; 103) und mehrere Arbeitseinheiten (4a, 4b, 5a, 5b), die bodenstehendes Gut mähen sollen, aufweist, wobei die Arbeitseinheiten (4a, 4b, 5a, 5b) mit dem Trägerfahrzeug (3; 103) verbunden sind, wobei die landwirtschaftliche Maschine (1; 101)
- mindestens zwei Frontarbeitseinheiten (4a, 4b);
- mindestens zwei Seitenarbeitseinheiten (5a, 5b), die im Betrieb auf beiden Seiten eines Arbeitsbereichs (18) der Frontarbeitseinheiten (4a, 4b) angeordnet sind,
umfasst, wobei die Frontarbeitseinheiten (4a, 4b) und die Seitenarbeitseinheiten (5a, 5b) bezüglich des Trägerfahrzeugs (3; 103) verschoben werden können, so dass sie eine Transportstellung oder eine Arbeitsstellung einnehmen, ***dadurch gekennzeichnet*, dass** die Frontarbeitseinheiten (4a, 4b) im Betrieb und in Fahrtrichtung (2) des Trägerfahrzeugs (3; 103) gesehen vor dem Trägerfahrzeug (3; 103) angeordnet sind, wobei die Frontarbeitseinheiten (4a, 4b) mit einer Frontkupplungsvorrichtung (9) des Trägerfahrzeugs (3; 103) verbunden sind, die ihre Verschiebung in im Wesentlichen vertikaler Richtung gestattet.

2. Landwirtschaftliche Maschine nach Anspruch 1, ***dadurch gekennzeichnet*, dass** die Seitenarbeitseinheiten (5a, 5b) im Betrieb und in Fahrtrichtung (2) gesehen hinter den Frontarbeitseinheiten (4a, 4b) angeordnet sind.

3. Landwirtschaftliche Maschine nach Anspruch 2, ***dadurch gekennzeichnet,* dass** die Seitenarbeitseinheiten (5a, 5b) im Betrieb und in Fahrtrichtung (2) gesehen hinter dem Trägerfahrzeug (3; 103) angeordnet sind.

4. Landwirtschaftliche Maschine nach Anspruch 2, ***dadurch gekennzeichnet,* dass** die Seitenarbeitseinheiten (5a, 5b) im Betrieb und in Fahrtrichtung (2) gesehen an den Seiten des Trägerfahrzeugs (3; 103) angeordnet sind.

5. Landwirtschaftliche Maschine nach irgend einem der Ansprüche 1 bis 4, ***dadurch gekennzeichnet*, dass** mindestens eine der Arbeitseinheiten (4a, 4b, 5a, 5b) mittels eines jeweiligen Gelenks (7a, 7b, 10a, 10b; 110a, 110b; 210a, 210b) mit einer in Fahrtrichtung (2) ausgerichteten Achse mit dem Trägerfahrzeug (3; 103) schwenkbar verbunden ist und dass Betätigungselemente vorgesehen sind, die die mindestens eine Arbeitseinheit (4a, 4b, 5a, 5b) um das jeweilige Gelenk (7a, 7b, 10a, 10b; 110a, 110b; 210a, 210b) aus der Arbeitsstellung in die Transportstellung und umgekehrt schwenken sollen.

6. Landwirtschaftliche Maschine nach Anspruch 5, ***dadurch gekennzeichnet*, dass** mindestens eine Arbeitseinheit (4a, 4b, 5a, 5b):
- in Arbeitsstellung auf im Wesentlichen horizontale Weise und
- in Transportstellung auf im Wesentlichen vertikale Weise angeordnet ist.

7. Landwirtschaftliche Maschine nach Anspruch 5 oder 6, ***dadurch gekennzeichnet*, dass** mindestens eine der Frontarbeitseinheiten (4a, 4b) mittels des jeweiligen Gelenks (7a, 7b) mit einer Kupplungskonstruktion (8) verbunden ist, die ihrerseits mit dem Trägerfahrzeug (3) verbunden ist.

8. Landwirtschaftliche Maschine nach Anspruch 7, ***dadurch gekennzeichnet*, dass** das Trägerfahrzeug (3; 103) eine Frontkupplungsvorrichtung (9) aufweist, die die Kupplungskonstruktion (8) in im Wesentlichen vertikaler Richtung verschieben soll.

9. Landwirtschaftliche Maschine nach irgend einem der Ansprüche 1 bis 8, ***dadurch gekennzeichnet*, dass** mindestens eine der Arbeitseinheiten (4a, 4b, 5a, 5b) mittels eines jeweiligen Gelenks (11a, 11b; 211a, 211b) mit einer quer zur Fahrtrichtung (2) ausgerichteten Achse mit dem Trägerfahrzeug (3; 103) verschiebbar verbunden ist und dass Betätigungselemente vorgesehen sind, die die mindestens eine Arbeitseinheit (4a, 4b, 5a, 5b) entlang dem jeweiligen Gelenk (11a, 11b; 211a, 211b) translatorisch bewegen sollen.

10. Landwirtschaftliche Maschine nach irgend einem der Ansprüche 5 bis 8 in Kombination mit Anspruch 9, ***dadurch gekennzeichnet*, dass** mindestens eine der Seitenarbeitseinheiten (5a, 5b) mittels des jeweiligen Gelenks (11a, 11b) mit einem jeweiligen Tragarm (12a, 12b) verschiebbar verbunden ist, wobei der Tragarm (12a, 12b) seinerseits mittels des jeweiligen Gelenks (10a, 10b; 110a, 110b) mit dem Trägerfahrzeug (3) schwenkbar verbunden ist.

11. Landwirtschaftliche Maschine nach irgend einem der Ansprüche 5 bis 8 in Kombination mit Anspruch 9, ***dadurch gekennzeichnet*, dass** mindestens eine der Seitenarbeitseinheiten (5a, 5b) mittels des jeweiligen Gelenks (210a, 210b) mit einem jeweiligen Tragarm (212a, 212b) schwenkbar verbunden ist, wobei der Tragarm (212a, 212b) seinerseits mittels des jeweiligen Gelenks (211a, 211b) mit dem Trägerfahrzeug (3) verschiebbar verbunden ist.

12. Landwirtschaftliche Maschine nach Anspruch 10 oder 11, ***dadurch gekennzeichnet,* dass** der Tragarm (12a, 12b; 212a, 212b) mittels des jeweiligen Gelenks (10a, 10b; 211a, 211b) mit einer Kupplungskonstruktion (13) verbunden ist, die ihrerseits mit dem Trägerfahrzeug (3) verbunden ist.

13. Landwirtschaftliche Maschine nach Anspruch 12, ***dadurch gekennzeichnet,* dass** das Trägerfahrzeug (3) eine hintere Kupplungsvorrichtung (14) aufweist, die die Kupplungskonstruktion (13) in im Wesentlichen vertikaler Richtung verschieben soll.

14. Landwirtschaftliche Maschine nach irgend einem der Ansprüche 1 bis 13, ***dadurch gekennzeichnet*, dass** sie zwei Frontarbeitseinheiten (4a, 4b) aufweist.

15. Landwirtschaftliche Maschine nach irgend einem der Ansprüche 1 bis 14, ***dadurch gekennzeichnet*, dass** sie zwei Seitenarbeitseinheiten (5a, 5b) aufweist.

16. Landwirtschaftliche Maschine nach irgend einem der Ansprüche 1 bis 15, ***dadurch gekennzeichnet*, dass** das Trägerfahrzeug (3; 103) eine Steuervorrichtung aufweist, die die Bewegung der Arbeitseinheiten (4a, 4b, 5a, 5b) beim Übergang aus der Transportstellung in die Arbeitsstellung und umgekehrt autonom steuern soll.

17. Landwirtschaftliche Maschine nach irgend einem der Ansprüche 1 bis 16, ***dadurch gekennzeichnet*, dass** jede Arbeitseinheit (4a, 4b, 5a, 5b) eine jeweilige Schneidvorrichtung aufweist, die bodenstehendes Gut mähen soll, und dass mindestens eine der Arbeitseinheiten (4a, 4b, 5a, 5b) eine jeweilige Fördervorrichtung (25a, 25b, 26a, 26b; 326a, 326b) aufweist, die das durch die entsprechende Schneidvorrichtung geschnittene Gut verschieben soll, bevor das Schnittgut den Boden berührt.

18. Landwirtschaftliche Maschine nach Anspruch 17, ***dadurch gekennzeichnet*, dass** mindestens eine der Frontarbeitseinheiten (4a, 4b) eine jeweilige Fördervorrichtung (25a, 25b) aufweist.

19. Landwirtschaftliche Maschine nach Anspruch 18, ***dadurch gekennzeichnet,* dass** die Fördervorrichtung (25a, 25b) ein Transportband (29a, 29b) aufweist, das quer hinter der entsprechenden Schneidvorrichtung angeordnet ist.

20. Landwirtschaftliche Maschine nach Anspruch 19, ***dadurch gekennzeichnet*, dass** ein Motor vorgesehen ist, der das Transportband (29a, 29b) in zwei Laufrichtungen antreiben soll.

21. Landwirtschaftliche Maschine nach irgend einem der Ansprüche 18 bis 20, ***dadurch gekennzeichnet*, dass** die Fördervorrichtung (25a, 25b) mit der entsprechenden Frontarbeitseinheit (4a, 4b) verschiebbar verbunden ist und dass Betätigungselemente vorgesehen sind, die die Fördervorrichtung (25a, 25b), in Arbeitsstellung gesehen, horizontal und quer zur Fahrtrichtung (2) translatorisch bewegen sollen.

22. Landwirtschaftliche Maschine nach irgend einem der Ansprüche 17 bis 21, ***dadurch gekennzeichnet,* dass** mindestens eine der Seitenarbeitseinheiten (5a, 5b) eine jeweilige Fördervorrichtung (26a, 26b; 326a, 326b) aufweist.

23. Landwirtschaftliche Maschine nach Anspruch 22, ***dadurch gekennzeichnet,* dass** die Fördervorrichtung (26a, 26b; 326a, 326b) ein oberes Transportband (30a, 30b; 330a, 330b) und ein unteres Transportband (31a, 31b; 331a, 331b) aufweist, wobei die Transportbänder (30a, 31a; 30b, 31b; 330a, 331a; 330b, 331b) zumindest in einer Position übereinander und in Querrichtung hinter der entsprechenden Schneidvorrichtung angeordnet sind.

24. Landwirtschaftliche Maschine nach Anspruch 23, ***dadurch gekennzeichnet*, dass** das untere Transportband (31a, 31b) mit der entsprechenden Seitenarbeitseinheit (5a, 5b) verschiebbar verbunden ist und dass Betätigungselemente vorgesehen sind, die das untere Transportband (31 a, 31b), in Arbeitsstellung gesehen, horizontal und quer zur Fahrtrichtung (2) translatorisch bewegen sollen.

25. Landwirtschaftliche Maschine nach Anspruch 23, ***dadurch gekennzeichnet*, dass** das untere Transportband (331a, 331b) mittels eines Gelenks (37a, 37b) mit einer nach oben ausgerichteten Achse mit der entsprechenden Seitenarbeitseinheit (5a, 5b) schwenkbar verbunden ist.

26. Landwirtschaftliche Maschine nach Anspruch 25, ***dadurch gekennzeichnet*, dass** das untere Transportband (331a, 331b) ein erstes Transportband (35a, 35b) und ein zweites Transportband (36a, 36b) aufweist.

27. Landwirtschaftliche Maschine nach Anspruch 26, ***dadurch gekennzeichnet,* dass** das zweite Transportband (36a, 36b) mittels eines jeweiligen Gelenks (38a, 38b) mit einer im Wesentlichen horizontalen Achse mit dem entsprechenden ersten Transportband (35a, 35b) schwenkbar verbunden ist.

28. Landwirtschaftliche Maschine nach irgend einem der Ansprüche 1 bis 27, ***dadurch gekennzeichnet*, dass** das Trägerfahrzeug (3; 103) zwei Hinterräder (15b) aufweist, welche mittels eines jeweiligen Gelenks mit einer im Wesentlichen horizontalen und quer zur Fahrtrichtung (2) verlaufenden Achse mit dem Trägerfahrzeug (103) verschiebbar verbunden sind, und dass Betätigungselemente vorgesehen sind, die jedes Hinterrad (15b) entlang dem jeweiligen Gelenk translatorisch bewegen sollen.

## Claims

1. Agricultural machine comprising a carrying vehicle (3; 103) and several work units (4a, 4b, 5a, 5b) which are intended to cut a standing product, said work units (4a, 4b, 5a, 5b) being connected to said carrying vehicle (3; 103), said agricultural machine (1; 101) comprising:
- at least two front work units (4a, 4b)
- at least two lateral work units (5a, 5b) arranged, during work, on either side of a work area (18) of said front work units (4a, 4b),
said front work units (4a, 4b) and said lateral work units (5a, 5b) being able to be moved with respect to said carrying vehicle (3; 103) so as to occupy a transport position or a work position, ***characterized in* that** the said front work units (4a, 4b) are arranged, during work and viewed in a direction of forward travel (2) of said carrying vehicle (3; 103), at the front of said carrying vehicle (3; 103), said front work units (4a, 4b) being connected to a front hitching device (9) of the carrying vehicle (3; 103) allowing to move them in a substantially vertical direction.

2. Agricultural machine as claimed in claim 1, ***characterized in* that**, during work and viewed in said direction of forward travel (2), said lateral work units (5a, 5b) are arranged backwards with regard to said front work units (4a, 4b).

3. Agricultural machine as claimed in claim 2, ***characterized in* that**, during work and viewed in said direction of forward travel (2), said lateral work units (5a, 5b) are arranged backwards with regard to said carrying vehicle (3; 103).

4. Agricultural machine as claimed in claim 2, ***characterized in* that**, during work and viewed in said direction of forward travel (2), said lateral work units (5a, 5b) are arranged on the sides of said carrying vehicle (3; 103).

5. Agricultural machine as claimed in any one of claims 1 to 4, ***characterized in* that** at least one of said work units (4a, 4b, 5a, 5b) is connected in a pivoting manner to said carrying vehicle (3; 103) by means of a respective articulation (7a, 7b, 10a, 10b; 110a, 110b; 210a, 210b) whose axis is directed in said direction of forward travel (2), and **in that** there are provided operating members intended to pivot said at least one work unit (4a, 4b, 5a, 5b) about said respective articulation (7a, 7b, 10a, 10b; 110a, 110b; 210a, 210b) from said work position to said transport position, and vice versa.

6. Agricultural machine as claimed in claim 5, ***characterized in* that** said at least one work unit (4a, 4b, 5a, 5b) is arranged:
- in the work position, at least substantially horizontally, and
- in the transport position, at least substantially vertically.

7. Agricultural machine as claimed in claim 5 or 6, ***characterized in* that** at least one of said front work units (4a, 4b) is connected by means of said respective articulation (7a, 7b) to a hitching structure (8), which hitching structure (8) is in turn connected to said carrying vehicle (3).

8. Agricultural machine as claimed in claim 7, ***characterized in* that** said carrying vehicle (3; 103) comprises a front hitching device (9) intended to move said hitching structure (8) in a substantially vertical direction.

9. Agricultural machine as claimed in any one of claims 1 to 8, ***characterized in* that** at least one of said work units (4a, 4b, 5a, 5b) is connected in a sliding manner to said carrying vehicle (3; 103) by means of a respective articulation (11a, 11b; 211a, 211b) whose axis is directed transversely to said direction of forward travel (2), and **in that** there are provided operating members intended to translationally move said at least one work unit (4a, 4b, 5a, 5b) in accordance with said respective articulation (11a, 11b; 211a, 211b).

10. Agricultural machine as claimed in any one of claims 5 to 8 taken in combination with claim 9, ***characterized in* that** at least one of said lateral work units (5a, 5b) is connected in a sliding manner by means of said respective articulation (11a, 11b) to a respective carrying arm (12a, 12b), said carrying arm (12a, 12b) being in turn connected in a pivoting manner by means of said respective articulation (10a, 10b; 110a, 110b) to said carrying vehicle (3).

11. Agricultural machine as claimed in any one of claims 5 to 8 taken in combination with claim 9, ***characterized in* that** at least one of said lateral work units (5a, 5b) is connected in a pivoting manner by means of said respective articulation (210a, 210b) to a respective carrying arm (212a, 212b), said carrying arm (212a, 212b) being in turn connected in a sliding manner by means of said respective articulation (211a, 211b) to said carrying vehicle (3).

12. Agricultural machine as claimed in claim 10 or 11, ***characterized in* that** said carrying arm (12a, 12b; 212a, 212b) is connected by means of said respective articulation (10a, 10b; 211a, 211b) to a hitching structure (13), which hitching structure (13) is in turn connected to said carrying vehicle (3).

13. Agricultural machine as claimed in claim 12, ***characterized in* that** said carrying vehicle (3) comprises a rear hitching device (14) intended to move said hitching structure (13) in a substantially vertical direction.

14. Agricultural machine as claimed in any one of claims 1 to 13, ***characterized in* that** it comprises two front work units (4a, 4b).

15. Agricultural machine as claimed in any one of claims 1 to 14, ***characterized in* that** it comprises two lateral work units (5a, 5b).

16. Agricultural machine as claimed in any one of claims 1 to 15, ***characterized in* that** said carrying vehicle (3; 103) comprises a control device intended to autonomously manage the movement of said work units (4a, 4b, 5a, 5b) upon passing from said transport position to said work position, and vice versa.

17. Agricultural machine as claimed in any one of claims 1 to 16, ***characterized in* that** each work unit (4a, 4b, 5a, 5b) comprises a respective cutting device intended to cut a standing product, and **in that** at least one of said work units (4a, 4b, 5a, 5b) comprises a respective conveying device (25a, 25b, 26a, 26b; 326a, 326b) intended to move the product cut by the corresponding cutting device before said cut product touches the ground.

18. Agricultural machine as claimed in claim 17, ***characterized in* that** at least one of said front work units (4a, 4b) comprises a respective conveying device (25a, 25b).

19. Agricultural machine as claimed in claim 18, ***characterized in* that** said conveying device (25a, 25b) comprises a conveyor belt (29a, 29b) arranged transversely behind said corresponding cutting device.

20. Agricultural machine as claimed in claim 19, ***characterized in* that** there is provided an engine intended to drive said conveyor belt (29a, 29b) in two directions of travel.

21. Agricultural machine as claimed in any one of claims 18 to 20, ***characterized in* that** said conveying device (25a, 25b) is connected in a sliding manner to said corresponding front work unit (4a, 4b), and **in that** there are provided operating members intended to translationally move said conveying device (25a, 25b) horizontally, viewed in the work position, and transversely to said direction of forward travel (2).

22. Agricultural machine as claimed in any one of claims 17 to 21, **characterized in that** at least one of said lateral work units (5a, 5b) comprises a respective conveying device (26a, 26b; 326a, 326b).

23. Agricultural machine as claimed in claim 22, ***characterized in* that** said conveying device (26a, 26b; 326a, 326b) comprises an upper conveyor belt (30a, 30b; 330a, 330b) and a lower conveyor belt (31a, 31b; 331a, 331b), said conveyor belts (30a, 31a; 30b, 31b; 330a, 331a; 330b, 331b) being arranged, at least in one position, one above the other and transversely behind the corresponding cutting device.

24. Agricultural machine as claimed in claim 23, ***characterized in* that** said lower conveyor belt (31a, 31b) is connected in a sliding manner to said corresponding lateral work unit (5a, 5b), and **in that** there are provided operating members intended to translationally move said lower conveyor belt (31a, 31b) horizontally, viewed in the work position, and transversely to said direction of forward travel (2).

25. Agricultural machine as claimed in claim 23, ***characterized in* that** said lower conveyor belt (331a, 331b) is connected in a pivoting manner to said corresponding lateral work unit (5a, 5b) by means of an articulation (37a, 37b) whose axis is directed upward.

26. Agricultural machine as claimed in claim 25, ***characterized in* that** said lower conveyor belt (331a, 331b) comprises a first conveyor belt (35a, 35b) and a second conveyor belt (36a, 36b).

27. Agricultural machine as claimed in claim 26, ***characterized in* that** said second conveyor belt (36a, 36b) is connected in a pivoting manner to said corresponding first conveyor belt (35a, 35b) by means of a respective articulation (38a, 38b) of substantially horizontal axis.

28. Agricultural machine as claimed in any one of claims 1 to 27, ***characterized in* that** said carrying vehicle (3; 103) comprises two rear wheels (15b), said rear wheels (15b) being connected in a sliding manner to said carrying vehicle (103) by means of a respective articulation whose axis is substantially horizontal and transverse to said direction of forward travel (2), and **in that** there are provided operating members intended to translationally move each rear wheel (15b) in accordance with said respective articulation.
